# EUROPEAN PATENT APPLICATION

(11) **EP 3 016 423 A1**
(43) Date of publication of application: **04.05.2016**
(21) Application number: 14817863.5
(22) Date of filing: 14.05.2014
(51) Int. Cl.: H04W 12/06

(54) **NETWORK SAFETY MONITORING METHOD AND SYSTEM**

(30) Priority: 27.06.2013 CN 201310265337
(71) Applicant: ZTE Corporation, Shenzhen, Guangdong 518057 (CN)
(72) Inventor: TENG, Zhimeng, Shenzhen Guangdong 518057 (CN); ZHOU, Sujing, Shenzhen Guangdong 518057 (CN)
(74) Representative: Schröer, Gernot H.
(86) International application number: PCT/CN2014/077469
(87) International publication number: WO 2014/206152

(57) **Abstract**

Embodiments of the present invention provide a network security monitoring method and system, which relates to the field of communications. The network security monitoring system disclosed in the embodiments of the present invention includes: an access security execution unit, configured to send a user security policy query request carrying a user identifier and/or a network address to a security policy engine unit, acquire a corresponding user security policy from a user security policy query response returned by the security policy engine unit, and execute the user security policy for the user; the security policy engine unit, configured to receive the user security policy query request, extract the user identifier and/or network address from the user security policy query request, determine user identity information corresponding to the extracted user identifier and/or network address, query the corresponding user security policy according to the user identity information, and feed back the queried-out user security policy through the user security policy query response. The embodiments of the present invention further disclose a network security monitoring method. The technical solution of the present application achieves the implementation of a network user's security policy

## Description

### Technical Field

The present invention relates to the field of communications, and more particularly, to an access control, identity authentication, and data monitoring method and system in the field of network security.

### Background of the Invention

The early stage of development of the Internet has the feature of freedom and opening-up, which brings some risks in aspects of public security and network security while promoting social progress, democratic development, and economic prosperity. Compared to various constraints in the real society, any network behavior can only trace to a certain IP (Internet Protocol) address, so that people tend to lack self-discipline for their actions, and some even use the Internet to carry out criminal acts.

With the development of the Internet, especially the explosive growth in the number of Internet users and Internet applications as well as the rapid development of mobile Internet, a relatively high requirement is also presented to the security supervision of the Internet, which needs to not only protect public security and network security of the Internet, but also protect the user's privacy security. Countries have considerations on how to balance the Internet security and the individual privacy, and for example, China puts forward the policy of "anonymity at foreground, real name at background".

To guarantee the security of the Internet, implementing the network security monitoring and management based on the security policy is a commonly used method and technique, wherein a technique based on the user identity is required to set the security policy according to the user identity, but the network users often are assigned with dynamic network addresses after logging in the network, which brings certain barriers to setting the security policy according to the users.

### Summary of the Invention

The technical problem required to be solved in the embodiments of the present invention is to provide a network security monitoring method and system, to associate an end-user's dynamic address with a user's registered identity information and a user's security policy.

In order to solve the abovementioned technical problem, the embodiment of the present invention discloses a network security monitoring system, which comprises an access security execution unit and a security policy engine unit, wherein:
the access security execution unit is configured to: acquire a network address or a user identifier of a user accessing a network, and send a user security policy query request carrying the user identifier and/or network address to the security policy engine unit, and acquire a corresponding user security policy from a user security policy query response returned by the security policy engine unit, and implement the user security policy for the user;
the security policy engine unit is configured to: receive the user security policy query request sent by the access security execution unit, extract the user identifier and/or network address from the user security policy query request, determine user identity information corresponding to the extracted user identifier and/or network address, query a corresponding user security policy according to the user identity information, and feed back the queried-out user security policy to the access security execution unit through the user security policy query response.

Preferably, in the abovementioned system, the security policy engine unit is further configured to: query the user identity information corresponding to the extracted user identifier and/or network address from locally cached data, or send a security policy retrieving information query request carrying the user identifier and/or network address to a user management system or other security policy engine units, and acquire the user identity information corresponding to the user identity and/or network address from a response fed back by the user management system or the other security policy engine units.

Preferably, the abovementioned system further comprises:
a security policy storage and management unit, configured to store and manage a corresponding relationship between the user identity information and the user security policy;
the security policy engine unit is further configured to query the user security policy corresponding to the user identity information through the security policy storage and management unit.

Preferably, in the abovementioned system, the access security execution unit is further configured to send original messages or related information of user network data to a data analysis center to perform subsequent analysis and audit.

The embodiment of the present invention further discloses a network security monitoring method, which comprises:
when a user accesses a network from a terminal, a network security monitoring system acquiring a network address or a user identifier of the user;
the network security monitoring system determining user identity information corresponding to the network address or the user identifier of the user, querying a user security policy of the user accessing the network according to the user identity information and implementing the user security policy for the user.

Preferably, in the abovementioned method, the network security monitoring system comprises an access security execution unit and a security policy engine unit, wherein:
the access security execution unit is configured to: acquire the network address or the user identifier of the user accessing the network, and send a user security policy query request carrying the user identifier and/or network address to the security policy engine unit;
the security policy engine unit is configured to: receive the user security policy query request sent by the access security execution unit, extract the user identifier and/or network address from the user security policy query request, determine user identity information corresponding to the extracted user identifier and/or network address, query the corresponding user security policy according to the user identity information, and feed back the queried-out user security policy to the access security execution unit through a user security policy query response;
the access security execution unit is further configured to: acquire the corresponding user security policy from the user security policy query response returned by the security policy engine unit, and implement the user security policy for the user.

Preferably, in the abovementioned method, the security policy engine unit determining the user identity information corresponding to the network address or the user identifier of the user refers to:
the security policy engine unit being configured to: query the user identity information corresponding to the user identifier and/or network address from locally cached data; or
the security policy engine unit being configured to: send a security policy retrieving information query request carrying the user identifier and/or network address to a user management system or other security policy engine units, and acquire the user identity information corresponding to the user identifier and/or network address from a response fed back by the user management system or the other security policy engine units.

Preferably, in the abovementioned method, the security policy engine unit querying the user security policy of the user accessing the network according to the user identity information refers to:
the security policy engine unit being configured to query a user security policy corresponding to the user identity information of the user accessing the network locally or from a security policy storage and management system.

Preferably, the abovementioned method further comprises:
the network security monitoring system being configured to send original messages or related information of user network data to a data analysis center to perform subsequent analysis and audit.

In the technical solution of the present application, with respect to the situation that a network user is usually assigned with a dynamic network address after logging in the network, and the existing network monitoring system is difficult to implement the security monitoring by assigning a security policy according to the user's actual registered identity, the embodiments of the present invention associate the end-user's dynamic address with the user's registered identity information and the user's security policy together, to facilitate implementing the execution of the network user's security policy.

### Brief Description of the Drawings

FIG. 1 is a diagram of a system structure of a network security monitoring system in accordance with an embodiment of the present invention;
FIG. 2 is a flow chart of a network security monitoring method in accordance with an embodiment of the present invention;
FIG. 3 is a flow chart of one embodiment of obtaining user identifier-network address mapping in accordance with an embodiment of the present invention;
FIG. 4 is a flow chart of another embodiment of obtaining user identifier-network address mapping in accordance with an embodiment of the present invention;
FIG. 5 is a flow chart of another embodiment of obtaining user identifier-network address mapping in accordance with an embodiment of the present invention;
FIG. 6 is a flow chart of obtaining a user security policy in accordance with an embodiment of the present invention;
FIG. 7 is a flow chart of one embodiment of a network security monitoring system being used to monitor data of an accessed user in accordance with the present invention;
FIG. 8 is a flow chart of another embodiment of a network security monitoring system being used to monitor data of an accessed user in accordance with the present invention;
FIG. 9 is a flow chart of another embodiment of a network security monitoring system being used to monitor data of an accessed user in accordance with the present invention.

### Preferred Embodiments of the Invention

Hereinafter, in conjunction with the accompanying drawings, the technical solution of the present invention will be further described in detail. In case of no conflict, the embodiments in the present invention and the features in the embodiments may be arbitrarily combined with each other.

### Embodiment 1

The present embodiment provides a network security monitoring system, which includes an access security execution unit and a security policy engine unit.

The access security execution unit is configured to: acquire a network address or a user identifier of a user accessing to a network, and send a user security policy query request carrying the user identifier and/or network address to the security policy engine unit, and acquire the corresponding user security policy from a user security policy query response returned by the security policy engine unit, and implement the user security policy for the user;
wherein, the user identifier includes but is not limited to any one of the following:
a phone number, a fixed telephone number, an International Mobile Subscriber Identity (IMSI) number, an International Mobile Equipment Identity (IMEI) number, a user login name, a subject unique identifier of a user digital certificate.

The network address includes but is not limited to any one or a combination of any two of the following items:
an Internet Protocol version 4 (IPv4) address, an Internet Protocol version 6 (IPv6) address or a network prefix, and a Transmission Control Protocol (TCP) port number.

Furthermore, the access security execution unit can be further configured to send original messages or related information of user network data to a data analysis center to perform subsequent analysis and audit.

The security policy engine unit is configured to: receive the user security policy query request sent by the access security execution unit, extract the user identifier and/or network address from the user security policy query request, determine user identity information corresponding to the extracted user identifier and/or network address, query the corresponding user security policy according to the user identity information, and feed back the queried-out user security policy to the access security execution unit through a user security policy query response.

The abovementioned security policy engine unit is further configured to: query the user identity information corresponding to the extracted user identifier and/or network address from locally cached data, or send a security policy retrieving information query request carrying the user identifier and/or network address to a user management system or other security policy engine units, and acquire the user identity information corresponding to the user identifier and/or network address from a response fed back by the user management system or the other security policy engine units.

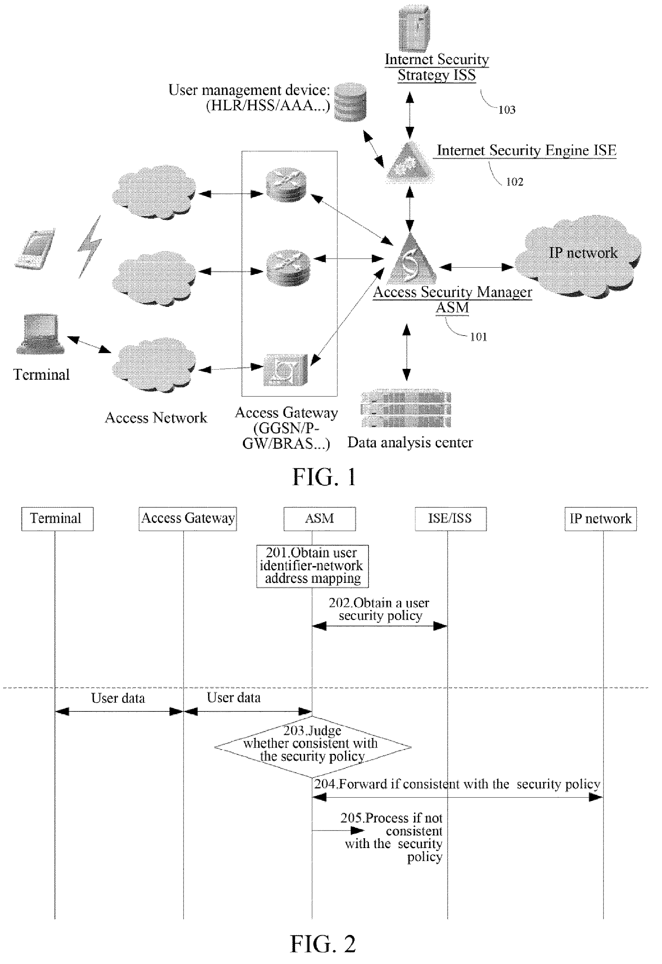

In some preferred schemes, a security policy storage and management unit is added on the basis of the abovementioned system architecture, at this time, the architecture of the network security monitoring system is as shown in FIG. 1, and an access security execution unit ASM(Access Security Manager) 101, a security policy engine unit ISE(Internet Security Engine) 102, and a security policy storage and management unit ISS(Internet Security Strategy) 103 are included.

Wherein the main functions of the access security execution unit ASM 101 are:
obtaining mapping between a user identifier and a network address; wherein the user identifier includes but is not limited to character strings that can uniquely identify a user such as a phone number, a fixed telephone number, an IMSI (international mobile subscriber identity) number, an IMEI number, a user login name, and a Subject Unique Identifier of a user digital certificate and so on; and the network address includes but is not limited to an IPv4 address, an IPv6 address or a network prefix, and a TCP port number and so on;
sending a user security policy query request to the ISE or the user management system, wherein the user security policy query request carries a user identifier and/or a network address that is used to acquire the corresponding user security policy;
implementing the user security policy on user network data between a user terminal and an IP network according on the received user security policy.

An authentication protocol and an address allocation protocol, etc. also can be transparently transmitted and forwarded between an access gateway and the IP network; and a user security policy that has been queried also can be cached;
original messages or related information of the user network data also can be sent to a data analysis center for subsequent analysis and audit.

For example, the ASM may send an mirror image of an original message of the user network data to the data analysis center; or send a source address, a destination address and a protocol of the original message to the data analysis center; or perform deep packet inspection (DPI) on the original message, and report an inspection result such as an accessed webpage address to the data analysis center.

The main functions of the security policy engine unit ISE 102 are: receiving a user security policy query request from the access security execution unit ASM, determining identity information (such as security information like user identity card information, etc.) of the user accessing the network according to the user identifier or network address in the user security policy query request, querying a corresponding user security policy through the user identity information and feeding the user security policy back to the access security execution unit;

Alternatively, the functions of the security policy engine unit also include: sending a user security policy retrieving information query request (which carries the user identifier and/or network address) to the user management system or other ISEs, and receiving a user security policy retrieving information query response containing user security policy retrieving information (that is, the user identity information) from the user management system or the other ISEs;
sending a user security policy query request (which carries the user security policy retrieving information, namely the user identity information) to the security policy storage and management unit ISS;
receiving a user security policy query response containing the user security policy from the security policy storage and management unit ISS; and
sending the user security policy query response to the access security execution unit ASM.

The user security policy also can be cached.

The main functions of the security policy storage and management unit ISS 103 are:
storing and managing the user security policy;
receiving a user security policy query request from the security policy engine unit ISE; and
sending a user security policy query response containing the user security policy to the security policy engine unit ISE.

In practical applications, the above access security execution unit and the security policy engine unit can be placed in different network elements separately or integrated in a same network element to be implemented. For example, the access security execution unit can be implemented separately with a network element such as a network access device or a network security equipment, such as a BRAS (Broadband Remote Access Server) and a Service Router (SR) in a network access device of a wired network, a GGSN (Gateway GPRS Support Node) and a P-GW in a core network access equipment of a wireless network, and a DPI (Deep Packet Inspection) device, an IPS (Intrusion Prevention System), an FW (Firewall) and a UTM (Unified Threat Management) device in the relevant network security equipment, and the security policy engine unit may be implemented separately by using network elements such as a service control layer device (such as an integrated service management platform ISMP) and a user management device (such as an HLR/HSS/AAA) and so on. The access security execution unit and the security policy engine unit may also be simultaneously placed in the network element such as the network access device or the network security device to be implemented, such as the abovementioned BRAS, SR, GGSN, P-GW, DPI, IPS, FW, UTM, and the like.

### Embodiment 2

The present embodiment provides a network security monitoring method, and the method includes the following operations:
when a user accesses a network from a terminal, a network security monitoring system acquiring a network address or a user identifier of the user;
the network security monitoring system determining user identity information corresponding to the network address or the user identifier of the user, querying a user security policy of a user accessing the network according to the user identity information, and implementing the user security policy for the user.

The network security monitoring system involved in the abovementioned method can use the architecture in the above embodiment 1, which at least includes an access security execution unit and a security policy engine unit, wherein:
the access security execution unit is configured to: acquire a network address or a user identifier of a user accessing a network, and send a user security policy query request carrying the user identifier and/or network address to the security policy engine unit;
the security policy engine unit is configured to: receive the user security policy query request sent by the access security execution unit, extract the user identifier and/or network address from the user security policy query request, determine the user identity information corresponding to the extracted user identifier and/or network address, query the corresponding user security policy according to the user identity information, and feed back the queried-out user security policy to the access security execution unit through a user security policy query response;
the access security execution unit is configured to acquire the corresponding user security policy from the user security policy query response returned by the security policy engine unit, and implement the user security policy for the user.

Wherein, the security policy engine unit in the network security monitoring system determining the user identity information corresponding to the network address or the user identifier of the user means:
the security policy engine unit being configured to: query the user identity information corresponding to the user identifier and/or network address from locally cached data; or send a security policy retrieving information query request carrying the user identifier and/or network address to a user management system, and acquire the user identity information corresponding to the user identity and/or network address from a response fed back by the user management system.

The security policy engine unit querying the user security policy of the user accessing the network according to the user identity information means: querying a user security policy corresponding to the user identity information of the user accessing the network locally or from a security policy storage and management system.

In practical applications, the above access security execution unit and the security policy engine unit may be placed in different network elements separately or integrated in a same network element to be implemented. For example, the access security execution unit can be implemented separately with a network element such as a network access device or a network security equipment, such as a BRAS (Broadband Remote Access Server) and a Service Router (SR) in a network access device of a wired network, a GGSN (Gateway GPRS Support Node) and a P-GW in a core network access equipment of a wireless network, and a DPI (Deep Packet Inspection) device, an IPS (Intrusion Prevention System), an FW (Firewall) or a UTM (Unified Threat Management) device in the relevant network security equipment, and the security policy engine unit may be implemented separately with network elements such as a service control layer device (such as an integrated service management platform ISMP) and a user management device (such as an HLR/HSS/AAA) and so on. The access security execution unit and the security policy engine unit also may be simultaneously placed in a network element such as the network access device or the network security device to be implemented, such as the abovementioned BRAS, SR, GGSN, P-GW, DPI, IPS, FW, UTM, and the like.

The user identifier involved in the abovementioned method includes but is not limited to any one or a combination of the following items:
a phone number, a fixed telephone number, an International Mobile Subscriber Identity (IMSI) number, an International Mobile Equipment Identity (IMEI) number, a user login name, and a subject unique identifier of a user digital certificate.

The abovementioned network address includes but is not limited to any one or a combination of any two of the following items:
an Internet Protocol version 4 (IPv4) address, an Internet Protocol version 6 (IPv6) address or a network prefix, and a Transmission Control Protocol (TCP) port number.

In addition, on the basis of the abovementioned method, the network security monitoring system may also send original messages or related information of the user network data to a data analysis center to perform subsequent analysis and audit.

The implementation process of the abovementioned method will be described in conjunction with the accompanying drawings below.

FIG. 2 shows the overall process of the network security monitoring method.

In step 201, a user accesses a network from a terminal and is assigned with a network address, an ASM obtains user identifier-network address mapping.

In step 202, the ASM obtains a user security policy.

Wherein, the initial user security policy is obtained from an ISS via an ISE, and the subsequent user security policy can be obtained from locally cached data.

In step 203, the user accesses an IP network from the terminal via an access gateway, and all the traffics enter the access security execution unit ASM. The ASM judges whether the received user data messages are consistent with the corresponding user security policy.

In step 204, if the user data are consistent with the user security policy, the ASM forwards the user data.

For example, for data messages generated by the user authentication protocols, such as an RADIUS protocol and a Diameter protocol, the ASM releases and forwards the data messages between a user terminal and an RADIUS/Diameter server; for data messages generated by the IP address assignment protocols, such as a Dynamic Host Configuration Protocol (DHCP), the ASM also releases and forwards the data messages between the user terminal and a DHCP server.

In step 205, if the user data are not consistent with the user security policy, the ASM further processes the user data, for example, the ASM may send a mirror image of an original message of the user network data to the data analysis center; or send a source address, a destination address and a protocol of the original message to the data analysis center; or perform deep packet inspection (DPI) on the original message, and report an inspection result such as an accessed webpage address to the data analysis center, so as to perform subsequent analysis and audit.

Herein, the method for the ASM processing the user data is only illustrative and not intended to limit the methods that can be employed. In the implementation, there are a variety of different methods for processing different application data of the same user, and also there can be a variety of different methods for processing the same application data of different users.

The access gateway can be switches, routers, and various gateways, such as a GGSN (Gateway GPRS Support Node) gateway in a GPRS network, a P-GW gateway in an EPS (Evolved Packet System) network, a BRAS (Broadband Remote Access Server) and an enterprise gateway and so on.

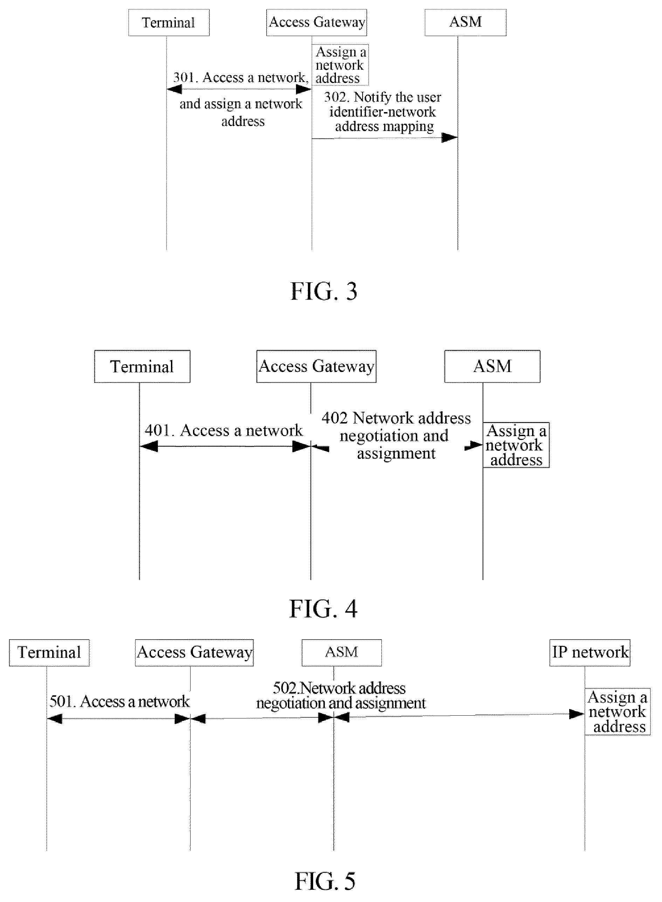

As shown in FIG. 3 to FIG. 5, FIG. 3 to FIG. 5 are flow charts of an ASM obtaining user identifier-network address mapping. Wherein FIG. 3 represents a flow of an ASM obtaining user identifier-network address mapping in the case that the access gateway assigns a network address to the terminal, and the steps are shown as follows.

In step 301, the terminal accesses the network, and the access gateway assigns a network address to the terminal.

In step 302, the access gateway sends user identifier-network address mapping to the ASM initiatively or at the request of the ASM.

FIG. 4 represents a flow of the ASM obtaining the user identifier-network address mapping in the case that the ASM assigns a network address to the terminal, and the steps are shown as follows.

In step 401, the terminal accesses the network.

In step 402, the access gateway and the ASM negotiate the network address of the terminal through the DHCP/RADIUS/Diameter protocol, and the ASM saves the user identifier-network address mapping.

FIG. 5 represents a flow of the ASM obtaining the user identifier-network address mapping in the case that the IP network assigns a network address to the terminal, and the steps are shown as follows.

In step 501, the terminal accesses the network.

In step 502, the access gateway and the IP network negotiate the network address of the terminal through the DHCP/RADIUS/Diameter protocol, and the ASM works as a Relay or a Server or a Client of the DHCP/RADIUS/Diameter protocol, and forwards a network address negotiation message of the access gateway and the IP network, and acquires the user identifier-network address mapping from the network address negotiation message and stores the user identifier-network address mapping.

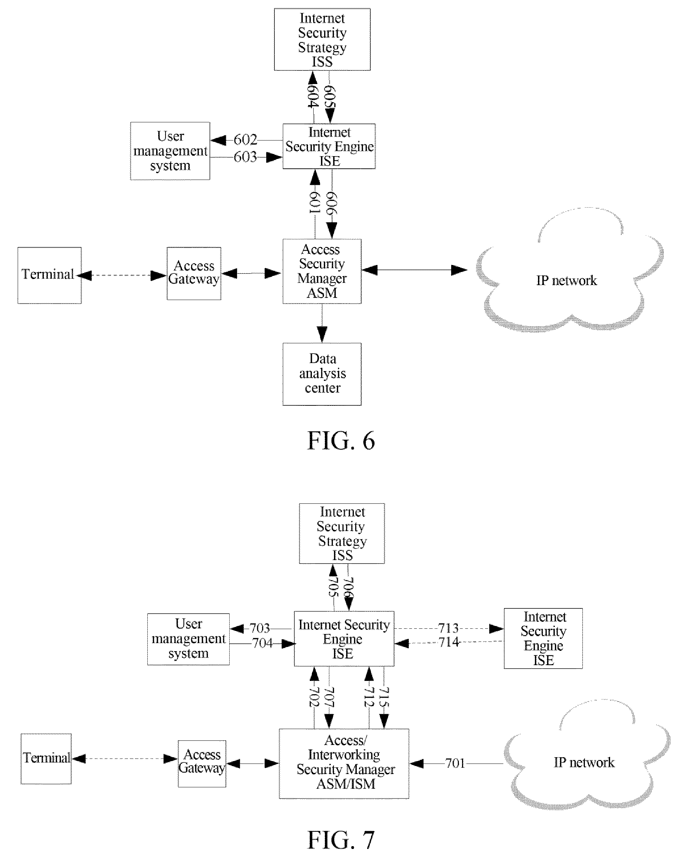

As shown in FIG. 6, it is a flow of the ASM obtaining the user security policy from the security policy storage and management unit ISS.

In step 601, after obtaining the mapping between the user identifier and the network address, the ASM sends a user security policy query request containing the user identifier and/or network address to the ISE.

In step 602, optionally, the ISE sends a user security policy retrieving information query request to a user management system or other ISEs.

In step 603, optionally, the ISE receives a user security policy retrieving information query response from the user management system or the other ISEs, wherein the response contains user security policy retrieving information (i.e. the user identity information) such as a user's identity card number.

In step 604, the ISE sends a security policy query request containing the user security policy retrieving information (such as the identity card number) to the security policy storage and management unit ISS.

In step 605, the ISE receives a user security policy query response from the security policy storage and management unit ISS, wherein the user security policy query response contains the user security policy.

In step 606, the ISE sends the user security policy query response to the access security execution unit ASM, wherein the user security policy query response contains the user security policy.

In the abovementioned flow of querying the user security policy, if the ASM locally queries out that the user security policy has been cached, the subsequent query steps can be omitted thereafter; similarly, if the security policy engine ISE queries out that the user security policy has been cached, the subsequent query steps may be omitted thereafter.

As shown in FIG. 7, it is a flow chart of one embodiment in which the network security monitoring system is used for monitoring data traffics of an accessed user. In the embodiment, after separately or simultaneously obtaining the accessed user's security policy and/or the accessing user's identity, according to the accessed user's security policy and the accessing user's identity, the ASM makes a decision about whether the accessed user is allowed to obtain the involved data traffics, and implements according to the decision. The following steps are included.

In step 701, the data messages received by the accessed user firstly enter the access security execution unit ASM.

In step 702, the ASM locally queries the user security policy of the accessed user according to the accessed user's network address, and executes according to the user security policy of the accessed user; and if the user security policy of the accessed user is not queried out locally, sends a user security policy query request of the accessed user to the security policy engine unit ISE, and the user security policy query request contains the accessed user's network address.

In step 703, the ISE sends a query request for the accessed user's security policy retrieving information to the user management system, wherein the query request contains the accessed user's network address and/or the accessing user's network address.

In step 704, the user management system returns a query response for the accessed user's security policy retrieving information to the ISE, wherein the query response contains retrieving information used for the ISS querying the accessed user's security policy, such as the accessed user's registered identity card number;.

In step 705, the ISE sends an accessed user security policy query request to the security policy storage and management ISS, wherein the request contains the accessed user security policy retrieving information.

In step 706, after receiving the accessed user security policy retrieving information, the ISS queries out the accessed user's user security policy according to the retrieving information therein such as the accessed user's registered identity card number and the accessing user's registered identity card number, and returns the user security policy to the ISE.

In step 707, the ISE then forwards the accessed user's user security policy to the ASM.

Alternatively, simultaneously with or separately from the abovementioned step 702 to step 707, the ASM obtains the accessing user's identity from the ISE, and the following steps are included.

In step 712, the ASM sends an accessing user identity query request to the ISE, and the request contains the accessing user's network address.

In step 713, if it does not query out the accessing user's identity locally, the ISE sends the accessing user identity query request to other ISEs, such as an ISE in the accessing user's registration location.

In step 714, the other ISEs return the accessing user's identity information such as an identity card number to the ISE initiating the query.

In step 715, the ISE returns the accessing user's identity information to the ASM.

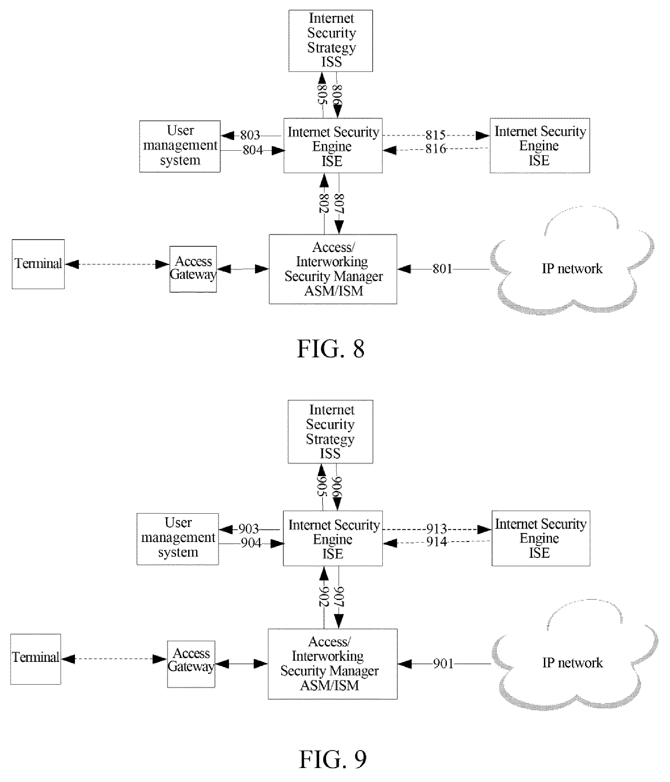

As shown in FIG. 8, it is a flow chart of another embodiment in which the network security monitoring system is used for monitoring the accessed user's data traffics. In the described embodiment, after separately or simultaneously obtaining the accessed user's user security policy and/or the accessing user's identity, according to the accessed user's user security policies and the accessing user's identity, the ISE makes a decision about whether the accessed user is allowed to obtain the involved data traffics, and sends the decision to the ASM to execute. The following steps are included.

In step 801, the data messages received by the accessed user firstly enter the access security execution unit ASM.

In step 802, the ASM locally queries the user security policy of the accessed user according to the accessed user's network address and/or the accessing user's network address, and executes according to the user security policy of the accessed user; if no user security policy of the accessed user is queried out locally, sends an accessed user security policy query request to the security policy engine unit ISE, wherein the request contains the accessed user's network address and/or the accessing user's network address.

In step 803, the ISE sends a query request for accessed user security policy retrieving information to the user management system, wherein the query request carries the accessed user's network address.

In step 804, the user management system returns a query response for the accessed user security policy retrieving information to the ISE, wherein the query response contains the retrieving information used for the ISS querying the accessed user's user security policy, such as the accessed user's registered identity card number.

In step 805, the ISE sends an accessed user security policy query request to the security policy storage and management unit ISS, wherein the request contains the accessed user security policy retrieving information.

In step 806, after receiving the accessed user security policy retrieving information, the ISS queries out the accessed user's security policy according to the retrieving information therein such as the accessed user's registered identity card number, and returns the security policy to the ISE; alternatively, the user security policy retrieving information also may contain the accessing user's registered identity card number.

In step 807, so far, the ISE has already obtained the accessed user's user security policy and the accessing user's identity (optional), and according to the accessed user's user security policy and the accessing user's identity, it makes a decision about whether the accessed user is allowed to acquire the involved data traffics, and sends the decision to the ASM.

Alternatively, simultaneously with or separately from the abovementioned step 803 to step 806, the ISE locally queries the accessing user's identity, and if the accessing user's identity is not queried out, then obtains the accessing user's identity from other ISEs (such as an ISE in the accessing user's registration location), and the following steps are included.

In step 815, the ISE sends an accessing user identity query request to the other ISEs, wherein the request contains the accessing user's network address.

In step 816, the queried ISE returns the accessing user's identity information such as an identity card number to the ISE initiating the query.

Next, it proceeds to execute the step 807.

As shown in FIG. 9, it is a flow chart of another embodiment in which the network security monitoring system is used for monitoring data traffics of the accessed user. In the embodiment, after acquiring the accessing user's identity, according to the accessed user's user security policy and the accessing user's identity, the ISS makes a decision about whether the accessed user is allowed to obtain the involved data traffics, and sends the decision via the ISE to the ASM to execute. The following steps are included.

In step 901, the data messages received by the accessed user firstly enter the access security execution unit ASM.

In step 902, the ASM locally queries the user security policy of the accessed user according to the accessed user's network address and/or the accessing user's network address, and executes according to the user security policy of the accessed user; if no security policy of the accessed user is queried out locally, sends an accessed user security policy query request to the security policy engine unit ISE, wherein the request contains the accessed user's network addresses and/or the accessing user's network addresses.

In step 903, the ISE sends a query request for accessed user security policy retrieving information to the user management system, wherein the query request contains the accessed user's network address.

In step 904, the user management system returns a query response for the accessed user security policy retrieving information to the ISE, wherein the query response contains the retrieving information used for the ISS querying the accessed user's security policy, such as the accessed user's registered identity card number.

In step 905, the ISE sends an accessed user security policy query request to the security policy storage and management unit ISS, wherein the request contains the accessed user security policy retrieving information and/or the accessing user's identity information.

In step 906, after receiving the accessed user security policy retrieving information, the ISS queries out the accessed user's user security policy according to the retrieving information therein, such as the accessed user's registered identity card number, and according to the user security policy and the accessing user's identity information (optional), makes a decision about whether the accessed user is allowed to obtain the involved data traffics of the accessing user, and sends the decision to the ISE.

In step 907, the ISE sends the received decision to the ASM to execute.

Alternatively, simultaneously with or separately from the abovementioned step 903 to step 904, the ISE locally queries the accessing user's identity, and if the accessing user's identity is not queried out, then obtains the accessing user's identity from other ISEs (such as an ISE in the accessing user's registration location), and the following steps are included.

In step 913, the ISE sends an accessing user identity query request to the other ISEs, wherein the request contains the accessing user's network address.

In step 914, the queried ISE returns the accessing user's identity information such as an identity card number to the ISE initiating the query.

Next, it proceeds to execute the step 905 to step 907.

Those ordinary people skilled in the art can understand that all or part of steps of the abovementioned method may be completed by the programs instructing the relevant hardware, and the programs may be stored in a computer readable storage medium, such as a read only memory, magnetic disk or optical disk. Alternatively, all or part of the steps of the abovementioned embodiments may also be implemented by using one or a plurality of integrated circuits. Accordingly, each module/unit in the abovementioned embodiments may be implemented in a form of hardware, or in a form of software function modules. The present invention is not limited to any combination of hardware and software in a specific form.

The above description is only the preferred embodiments of the present invention and is not used to limit the protection scope of the embodiments of the present invention. Any changes, equivalent replacements and improvements, etc. made within the spirit and principle of the embodiments of the present invention should be included within the protection scope of the embodiments of the present invention.

### Industrial Applicability

In the technical solution of the present application, with respect to the situation that a network user is usually assigned with a dynamic network address after logging in the network, and the existing network monitoring system is difficult to implement the security monitoring by assigning a security policy according to the user's actual registered identity, the embodiments of the present invention associate the end-user's dynamic address with the user's registered identity information and user's security policy together, to facilitate implementing the execution of the network user's security policy.

## Claims

1. A network security monitoring system, comprising an access security execution unit and a security policy engine unit, wherein:
the access security execution unit is configured to acquire a network address or a user identifier of a user accessing a network, and send a user security policy query request carrying the user identifier and/or network address to the security policy engine unit, and acquire a corresponding user security policy from a user security policy query response returned by the security policy engine unit, and implement the user security policy for the user;
the security policy engine unit is configured to: receive the user security policy query request sent by the access security execution unit, extract the user identifier and/or network address from the user security policy query request, determine user identity information corresponding to the extracted user identifier and/or network address, query a corresponding user security policy according to the user identity information, and feed back the queried-out user security policy to the access security execution unit through the user security policy query response.

2. The system of claim 1, wherein,
the security policy engine unit is further configured to: query the user identity information corresponding to the extracted user identifier and/or network address from locally cached data, or send a security policy retrieving information query request carrying the user identifier and/or network address to a user management system or other security policy engine units, and acquire the user identity information corresponding to the user identity and/or network address from a response fed back by the user management system or the other security policy engine units.

3. The system of claim 1, further comprising:
a security policy storage and management unit, configured to store and manage a corresponding relationship between the user identity information and the user security policy;
wherein the security policy engine unit is configured to query the user security policy corresponding to the user identity information through the security policy storage and management unit.

4. The system of claim 1, 2 or 3, wherein,
the access security execution unit is further configured to send original messages or related information of user network data to a data analysis center to perform subsequent analysis and audit.

5. A network security monitoring method, comprising:
when a user accesses a network from a terminal, a network security monitoring system acquiring a network address or a user identifier of the user;
the network security monitoring system determining user identity information corresponding to the network address or the user identifier of the user, querying a user security policy of the user accessing the network according to the user identity information and implementing the user security policy for the user.

6. The method of claim 5, wherein, the network security monitoring system comprises an access security execution unit and a security policy engine unit,
the access security execution unit is configured to: acquire the network address or the user identifier of the user accessing the network, and send a user security policy query request carrying the user identifier and/or network address to the security policy engine unit;
the security policy engine unit is configured to: receive the user security policy query request sent by the access security execution unit, extract the user identifier and/or network address from the user security policy query request, determine user identity information corresponding to the extracted user identifier and/or network address, query a corresponding user security policy according to the user identity information, and feed back the queried-out user security policy to the access security execution unit through a user security policy query response;
the access security execution unit is further configured to: acquire the corresponding user security policy from the user security policy query response returned by the security policy engine unit, and implement the user security policy for the user.

7. The method of claim 6, wherein, the security policy engine unit determining the user identity information corresponding to the network address or the user identifier of the user refers to:
the security policy engine unit being configured to: query the user identity information corresponding to the user identifier and/or network address from locally cached data; or
the security policy engine unit being configured to: send a security policy retrieving information query request carrying the user identifier and/or network address to a user management system or other security policy engine units, and acquire the user identity information corresponding to the user identifier and/or network address from a response fed back by the user management system or the other security policy engine units.

8. The method of claim 6, wherein, the security policy engine unit querying the user security policy of the user accessing the network according to the user identity information refers to:
the security policy engine unit being configured to query a user security policy corresponding to the user identity information of the user accessing the network locally or from a security policy storage and management system.

9. The method of claim 6, 7 or 8, further comprising:
the network security monitoring system being configured to send original messages or related information of user network data to a data analysis center to perform subsequent analysis and audit.
